# FASCICULE DE BREVET EUROPEEN

(11) **EP 2 160 819 B1**
(45) Date de publication et mention de la délivrance du brevet: **02.09.2015**
(21) Numéro de dépôt: 08805861.5
(22) Date de dépôt: 27.05.2008
(51) Int. Cl.: H02K 11/00, H02K 5/173, H02K 19/02, H02K 15/14, H02K 29/08

(54) **SYSTEME DE SUPPORT D'ARBRE POUR MOTEUR ELECTRIQUE, MOTEUR ELECTRIQUE ET PROCEDE DE MONTAGE**
ANTRIEBSWELLENSTÜTZSYSTEM FÜR EINEN ELEKTROMOTOR, ELEKTROMOTOR UND HERSTELLUNGSVERFAHREN DAFÜR
SHAFT SUPPORTING SYSTEM FOR AN ELECTRIC MOTOR, ELECTRIC MOTOR AND ASSEMBLY METHOD

(30) Priorité: 29.06.2007 FR 0756141
(43) Date de publication de la demande: 10.03.2010
(73) Titulaire: Aktiebolaget SKF, 415 50 Göteborg (SE)
(72) Inventeur: DEBRAILLY, Franck, F-37380 Nouzilly (FR); SAUSSET, Vincent, F-37190 Azay-Le-Rideau (FR)
(74) Mandataire: Dossmann, Gérard
(86) Numéro de dépôt international: PCT/FR2008/050917
(87) Numéro de publication internationale: WO 2009/004199

(56) Documents cités:
- EP-A- 1 298 786
- EP-A- 1 408 603
- EP-A- 1 452 753
- WO-A-03/094324
- WO-A1-2009/004198
- FR-A- 2 838 884
- FR-A- 2 866 490
- FR-A- 2 884 367
- JP-A- 2004 166 355
- US-A- 5 184 038

## Description

La présente invention concerne le domaine des moteurs électriques et plus particulièrement celui des supports permettant d'assurer la liaison mécanique entre un arbre tournant et un carter de moteur électrique.

Le document EP-A2-1 667 637 décrit un moteur comprenant une pièce de fixation associée à des capteurs prévus pour détecter la rotation de l'arbre du moteur. L'arbre est monté à rotation, au moyen de roulements, dans une pièce intermédiaire sur laquelle la pièce de fixation est rapportée.

Dans un moteur conventionnel de ce type, les étapes d'assemblage du moteur sont relativement nombreuses et compliquées du fait du grand nombre de pièces séparées qui assurent les fonctions mécaniques, électriques de détection des paramètres de rotation.

La présente invention vise à remédier aux inconvénients de l'état de la technique évoqués ci-dessus.

La présente invention propose un support d'arbre multifonctions. Un système de support selon le préambule de la revendication 1 est connu par le document FR 2 866 490.

La présente invention propose un sous-ensemble roulement et flasque assurant la liaison mécanique entre l'arbre et le carter du moteur, et servant à des moyens de détection de paramètres de rotation de l'arbre.

Dans un mode de réalisation, le système de support d'arbre pour moteur électrique du type comprenant un carter, un rotor et un stator pourvu d'une pluralité de pièces polaires comportant un bobinage et des bornes de connexion reliées au bobinage des pièces polaires, comprend :
- un palier à roulement instrumenté muni d'une bague tournante prévue pour être montée sur ledit arbre et d'une bague non tournante,
- un ensemble de détection de paramètres de rotation, et
- un flasque de support pourvu d'une première portion axiale cylindrique délimitant un logement à l'intérieur duquel est montée la bague non tournante, d'une première portion radiale prolongeant vers l'intérieur une extrémité axiale de la première portion axiale et ménageant une surface de butée pour la bague non tournante, et d'une seconde portion radiale prolongeant vers l'extérieur la première portion axiale axialement du côté opposé à la première portion radiale.

Le flasque comprend une seconde portion axiale prolongeant une extrémité de grand diamètre de la seconde portion radiale et entoure radialement la première portion axiale et délimitant avec ladite portion un espace annulaire permettant le logement d'une extrémité des pièces polaires du stator du moteur électrique. Ladite seconde portion radiale est pourvue d'ouvertures pour permettre le passage des bornes de connexion du stator du moteur.

L'ensemble de détection est muni d'un bloc capteur comprenant au moins un élément capteur et d'un élément codeur monté sur la bague tournante apte à défiler à rotation en regard de l'élément capteur autour d'un axe du système. Le bloc capteur est monté à l'intérieur du logement délimité par la première portion axiale du flasque en étant monté en contact contre ladite portion radiale et mobile angulairement par rapport à ladite portion axiale autour de l'axe en vue d'une immobilisation de la position angulaire relative du bloc capteur et du flasque dans une position de réglage choisie.

Le bloc capteur peut définir un espace annulaire ouvert en direction du palier à roulement à l'intérieur duquel est disposé l'élément capteur. Dans un mode de réalisation, le bloc capteur comprend une portion axiale de grand diamètre maintenue en appui axial contre la bague non tournante du palier à roulement par l'intermédiaire du flasque, une portion axiale de petit diamètre et une portion radiale reliant lesdites portions axiales. De préférence, la portion axiale de petit diamètre du bloc capteur forme un passage étroit avec la bague tournante du palier à roulement.

Avantageusement, le système comprend des moyens de liaison temporaires ou provisoires entre le bloc capteur et le flasque aptes à permettre une retenue axiale dudit bloc relativement au flasque.

Dans un mode de réalisation, le système comprend des moyens d'indexation angulaire aptes à immobiliser la position angulaire relative du bloc capteur et la portion axiale du flasque, lorsque le bloc capteur est positionné angulairement par rapport à la bague non tournante dans une position de réglage choisie.

Le système présente l'avantage de permettre un ajustement ou modification de la position angulaire relative du ou des éléments capteur une fois que le support est disposé sur l'arbre du moteur. En effet, lors du montage final du support, il peut être nécessaire d'optimiser le positionnement angulaire relatif de ces éléments pour obtenir un fonctionnement optimal du moteur. En d'autres termes, il est possible de modifier le pré-positionnement angulaire du ou des éléments capteurs après le montage du support assurant la liaison entre l'arbre et le carter du moteur.

Le flasque de support peut avantageusement comprendre au moins en partie les moyens d'indexation angulaire.

Dans un mode de réalisation, le flasque comprend localement des protubérances en saillie radialement vers l'intérieur formant les moyens d'indexation angulaire.

Ainsi, il devient possible d'obtenir l'immobilisation angulaire du support et du bloc capteur sans qu'il soit nécessaire de prévoir d'organe additionnel. En d'autres termes, l'utilisation du support pour former les moyens d'indexation angulaire permet l'obtention d'un support particulièrement compact et économique.

De préférence, le bloc capteur comprend des encoches aptes à coopérer avec les protubérances du flasque de support.

Dans un mode de réalisation, le bloc capteur comprend des oreilles de fixation formant en partie les moyens d'indexation angulaire.

L'invention concerne également un moteur électrique de type synchrone comprenant un arbre et un système tel que défini précédemment supportant ledit arbre. Le système peut fermer une extrémité axiale du moteur.

L'invention concerne enfin un procédé de montage d'un système de support d'arbre pour moteur électrique, du type comprenant un carter, un rotor et un stator pourvu d'une pluralité de pièces polaires comportant un bobinage et des bornes de connexion reliées au bobinage des pièces polaires, le système comprenant un palier à roulement instrumenté muni d'une bague tournante prévue pour être montée sur ledit arbre et d'une bague non tournante, un ensemble de détection de paramètres de rotation muni d'un bloc capteur comprenant au moins un élément capteur et d'un élément codeur monté sur la bague tournante apte à défiler à rotation en regard de l'élément capteur autour d'un axe du système, et un flasque de support pourvu d'une première portion axiale cylindrique délimitant un logement à l'intérieur duquel est montée la bague non tournante, d'une première portion radiale prolongeant vers l'intérieur une extrémité axiale de la première portion axiale et ménageant une surface de butée pour la bague non tournante, d'une seconde portion radiale prolongeant vers l'extérieur la première portion axiale axialement du côté opposé à la première portion radiale, et d'une seconde portion axiale prolongeant une extrémité de grand diamètre de la seconde portion radiale et entourant radialement la première portion axiale et délimitant avec ladite portion un espace annulaire permettant le logement d'une extrémité des pièces polaires du stator du moteur électrique. Ladite seconde portion radiale est pourvue d'ouvertures pour permette le passage des bornes de connexion du stator du moteur. Avant montage sur l'arbre, on pré-positionne angulairement le bloc capteur à l'intérieur du logement délimité par la première portion axiale du flasque, et en contact avec ladite portion axiale et après montage sur l'arbre, on fait tourner le bloc capteur à l'intérieur de la première portion axiale du flasque jusqu'à obtenir un positionnement relatif angulaire choisi de l'élément capteur et de la bague non tournante, puis on solidarise angulairement le bloc capteur et le flasque.

Dans un mode de mise en oeuvre, on solidarise angulairement le bloc capteur et le flasque par déformation mécanique du flasque de support pour former des protubérances de fixation du bloc capteur.

Dans un autre mode de mise en oeuvre, on solidarise angulairement le bloc capteur et le flasque de support par vissage.

Avantageusement, on monte le système sur un arbre d'un moteur électrique de type synchrone comportant un rotor et un stator.

Dans un mode de mise en oeuvre, avant la solidarisation angulaire du bloc capteur et du flasque, on entraîne en rotation le moteur électrique par un organe d'entraînement extérieur, on recueille les signaux émis par le stator du moteur et par le ou les éléments capteurs, on compare les signaux émis, on calcule l'angle de décalage entre les signaux émis par le stator du moteur et les signaux émis par le ou les éléments capteurs, et on fait tourner le bloc capteur à l'intérieur du flasque de support d'une valeur égale à l'angle de décalage déterminé.

L'invention sera mieux comprise à l'étude de la description détaillée d'un mode de réalisation pris à titre d'exemple nullement limitatif et illustré par les dessins annexés, sur lesquels :
- la figure 1 est une vue coupe axiale d'un moteur électrique,
- la figure 2 est une vue de face du moteur électrique de la figure 1,
- la figure 3 est une vue en perspective du moteur électrique de la figure 1,
- la figure 4 est une vue en coupe axiale d'un support d'arbre de moteur électrique selon un premier mode de réalisation avant une étape d'indexation angulaire,
- la figure 5 est une est une vue en perspective du support d'arbre de la figure 4,
- la figure 6 est une vue en coupe axiale du support d'arbre de la figure 4 après l'étape d'indexation angulaire,
- la figure 7 est une est une vue en perspective du support d'arbre de la figure 6,
- la figure 8 est une vue schématique de signaux émis par le moteur électrique de la figure 1 et par des éléments capteurs,
- la figure 9 est une vue en coupe axiale d'un support d'arbre de moteur électrique selon un second mode de réalisation, et
- la figure 10 est une vue en en perspective du support d'arbre de la figure 9.

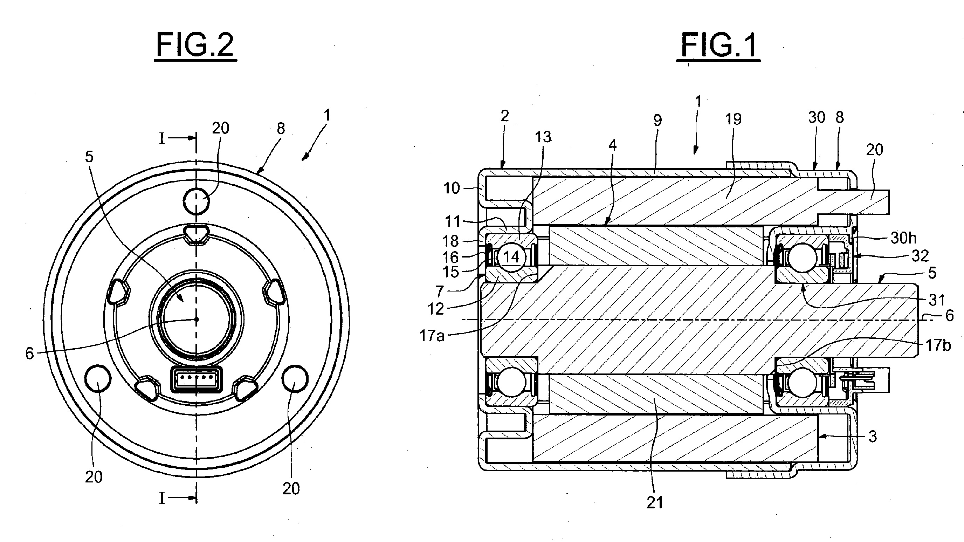

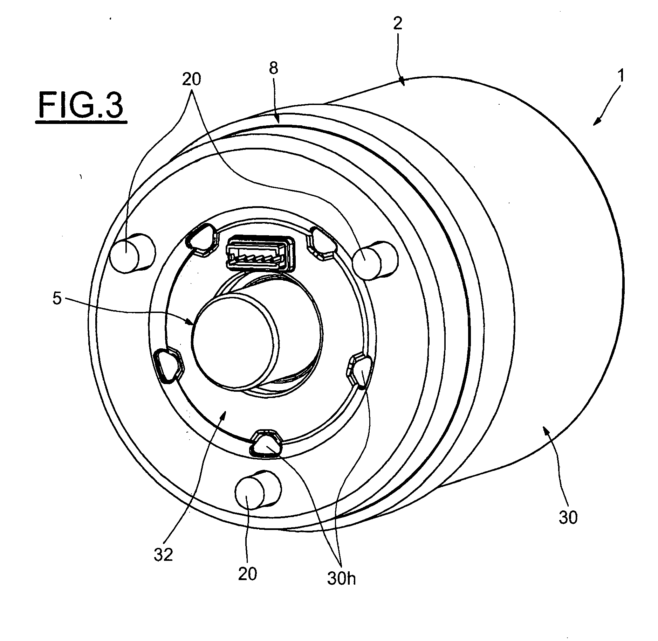

Comme on peut le voir sur les figures 1 à 3, le moteur électrique référencé 1 dans son ensemble, comprend un carter 2, un stator 3 monté dans le carter 2, un rotor 4 et un arbre 5 solidaires en rotation l'un de l'autre autour d'un axe 6, un palier à roulement 7 disposé entre une des extrémités de l'arbre 5 et le carter 2, et un système de support 8 d'arbre monté sur le carter 2.

Plus précisément, le carter 2 comprend une partie axiale 9, un fond 10 fermant l'une des extrémités de la partie axiale 9, et une collerette axiale 11 prolongeant le fond 10, centrée sur l'axe du moteur et prévue pour recevoir le palier à roulement 7.

Le palier à roulement 7 peut être de type conventionnel avec une bague intérieure 12, une bague extérieure 13, une rangée d'éléments roulants 14, ici des billes, disposés entre un chemin de roulement extérieur de la bague intérieure 12 et un chemin de roulement intérieur de la bague extérieure 13. Le roulement 7 est pourvu d'une cage 15 de maintien de l'espace circonférentiel des éléments roulants 14 ainsi que d'un flasque d'étanchéité disposé du côté orienté vers l'extérieur du moteur 1. La présence d'un joint ou flasque d'étanchéité du côté intérieur n'est pas indispensable, dans la mesure où le fond 10 fermé protège efficacement le roulement 7 contre l'intrusion de polluants extérieurs. L'une des extrémités de l'arbre 5 est emmanchée dans la bague intérieure 12 et vient en appui contre ladite bague par l'intermédiaire d'un épaulement 17a. La bague extérieure 13 est quant à elle en butée contre un épaulement 18 prolongeant radialement vers l'intérieur la collerette axiale 11.

Le stator 3 se présente sous la forme d'une pièce tubulaire, venant à proximité du fond 10 et en contact avec l'alésage de la partie axiale 9. Le stator 3 comprend une pluralité de pièces polaires 19 comportant un bobinage, et des bornes 20 de connexion, ici au nombre de 3, reliées au bobinage des pièces polaires 19. Les bornes 20 de connexion sont en saillie en direction opposée au fond 10. Le rotor 4 est fixé sur l'arbre 5 et monté à l'intérieur du stator 3 tout en pouvant tourner par rapport audit stator, autour de l'axe 6. Le rotor 4 est pourvu d'une pluralité d'aimants permanents 21 solidaires de l'arbre 5. Le stator 3 et le rotor 4 sont disposés de façon que les aimants 21 défilent à rotation avec un faible entrefer radial devant les pièces polaires 19 du stator.

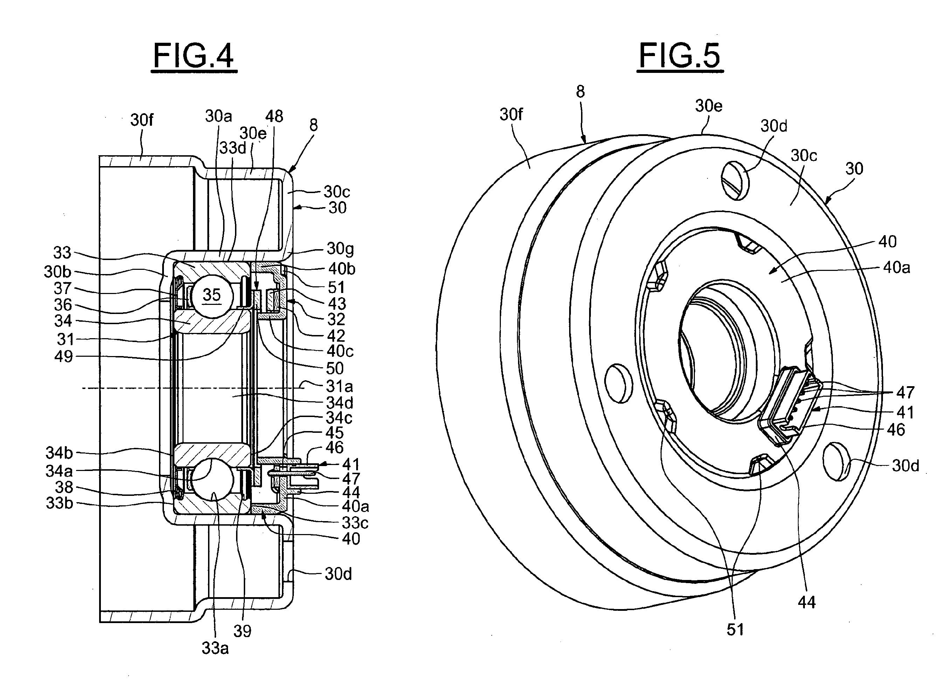

Comme illustré plus visiblement sur les figures 4 à 7, le système de support 8 comprend un flasque 30 de support, un palier à roulement 31 supporté par le flasque 30, et un ensemble de détection 32 de paramètres de rotation associé au roulement.

Le roulement 31, d'axe 31a coaxial avec l'axe 6, comprend une bague non tournante 33 extérieure, une bague tournante 34 intérieure, une rangée d'éléments roulants 35, ici des billes, une cage 36 de maintien de l'espacement circonférentiel régulier des éléments roulants 35 et un flasque d'étanchéité 37 fixé sur la bague non tournante 33 et formant un passage étroit avec une portée axiale de la bague tournante 34.

Les bagues 33 et 34 comprennent chacune un chemin de roulement 33a, 34a, respectivement sur leur alésage et sur leur surface extérieure axiale. Les chemins de roulement 33a et 34a présentent une forme toroïdale et peuvent être formés par usinage d'une portion de tube ou d'une ébauche annulaire.

La bague extérieure 33 comprend également deux rainures 38 et 39, adjacentes à des surfaces frontales radiales de ladite bague extérieure 4. Les rainures 38 et 39 sont symétriques entre elles par rapport à un plan passant par le centre les éléments roulants 35. La rainure 39 permet la fixation du flasque d'étanchéité 37.

Les bagues 33 et 34 sont symétriques par rapport à un plan passant par le centre des éléments roulants 35. Les bagues 33 et 34 comprennent chacune une surface radiale frontale 33b, 34b du côté de la rainure 38. Les surfaces radiales frontales 33b et 34b sont sensiblement coplanaires. La surface radiale frontale 34b vient en appui contre un épaulement 17b de l'arbre 5. Du côté opposé, les bagues 33 et 34 comprennent également chacune une surface radiale frontale 33c et 34c, ces surfaces étant sensiblement coplanaires. La bague 34 comprend un alésage cylindrique 34d à l'intérieur duquel est emmanché l'autre extrémité de l'arbre 5 et la bague 33 comprend une surface extérieure axiale cylindrique 33d. La bague non tournante 34 et la bague tournante 33 sont concentriques.

L'ensemble de détection 32 est fixé contre la bague non tournante 33 extérieure par l'intermédiaire du flasque 30 de support, comme cela sera décrit plus en détail par la suite. L'ensemble de détection 32 comprend principalement un bloc capteur 40, un connecteur 41 et une carte de circuit imprimé 42.

Le bloc capteur 40 présente une forme générale annulaire à section en U, et comprend une branche ou portion radiale 40a disposée entre une branche ou portion axiale de grand diamètre 40b et une branche ou portion axiale de petit diamètre 40c. La branche axiale de petit diamètre 40c présente une longueur inférieure à celle de la branche axiale de grand diamètre 40b. La branche axiale de grand diamètre 40b est maintenue en appui axial contre la surface radiale frontale 33c de la bague non tournante 33, par l'intermédiaire du flasque de support 30, comme cela sera décrit plus en détail par la suite.

La branche axiale de petit diamètre 40c vient former un passage étroit avec la surface frontale radiale 34c de la bague intérieure 34. Le bloc capteur 40 définit un espace annulaire ouvert en direction du roulement 31. Plus précisément, l'espace annulaire est délimité par la portion axiale de grand diamètre 40b, la portion axiale de petit diamètre 40c et la portion radiale 40a reliant lesdites portions. Avantageusement, on utilise pour la fabrication du bloc capteur 40 une matière synthétique, par exemple du polybutylène tétraphtalate (PBT). Le bloc capteur 40 peut être obtenu par moulage.

La carte de circuit imprimé 42 est disposée dans le fond dudit espace annulaire en contact avec la portion radiale 40a du bloc capteur 40. La carte de circuit imprimé 42 supporte au moins un élément capteur 43, par exemple une cellule magnétosensible du type à effet Hall. Dans ce mode de réalisation, l'ensemble de détection 32 comporte trois capteurs 43, un seul étant visible sur les figures.

Le bloc capteur 40 comprend en outre un élément de positionnement 44 destiné à coopérer avec le connecteur 41. L'élément de positionnement 44 se présente sous la forme d'un parallélépipède creux délimitant un espace rectangulaire dans lequel est disposé le connecteur 41. L'élément de positionnement 44 est en saillie axiale par rapport à la portion radiale 40a du bloc capteur 40, en direction opposée au roulement 31. L'élément de positionnement 44 occupe un secteur angulaire limité, contrairement au reste du bloc capteur 40 annulaire. L'élément de positionnement 44 s'étend axialement sur une longueur nettement inférieure à celle du connecteur 41 et sert de guidage lors du montage dudit connecteur 41. L'élément de positionnement 44 définit ainsi un logement ouvert pour le connecteur 41.

Ce logement est complété par une ouverture 45 ménagée de façon traversante à travers la portion radiale 40a du bloc capteur 40 et débouchant ainsi dans l'espace où est disposée la carte de circuit imprimé 42. Des trous (non référencés) sont prévus dans la carte de circuit imprimé 42, de façon à venir en regard de l'ouverture 45 une fois la carte mise en place.

Le connecteur 41 comprend une partie isolante 46 et une pluralité de broches 47 conductrices. La partie isolante 46 présente une forme globale de parallélépipède rectangle insérée entre l'élément de positionnement 44 du bloc capteur 11 et en contact avec la paroi radiale 40a. La partie isolante 46 est ouverte sur sa face radiale opposée à la paroi radiale 40a du bloc capteur 40 pour permettre l'insertion d'une fiche électrique.

Les broches 47, fixées à demeure dans une paroi radiale de fond de la partie isolante 46, sont en saillie de part et d'autre de ladite paroi radiale. Les broches 47 traversent l'ouverture 45 ménagée dans la paroi radiale 40a et les trous ménagés dans la carte de circuit imprimé 42 et sont légèrement en saillie au-delà de la carte de circuit imprimé 42 tout en étant fixés à celles-ci par une soudure (non référencée), par exemple du type à l'étain. Les broches 47 du connecteur 41 forment ainsi une liaison mécanique axiale entre la partie isolante 46 du connecteur 41 d'un côté de la paroi radiale 40a et la carte de circuit imprimé 42 de l'autre côté. La partie isolante du connecteur 41 et la carte de circuit imprimé 42 sont donc maintenues axialement en contact avec ladite portion radiale 11a qui forme une cloison de séparation.

Les soudures et les broches 47 assurent ainsi une double fonction de liaison électrique pour la transmission de signal en provenance des capteurs 43 ou d'un circuit électronique de traitement d'une part, et de liaison mécanique d'autre part, pour maintenir ensemble le connecteur 41, le bloc capteur 40 et la carte de circuit imprimé 42.

L'ensemble de détection 32 comprend également un élément codeur 48 fixé sur la bague intérieure 34. Plus précisément, l'élément codeur 48 comprend un support 49, par exemple une coupelle en tôle à section en L emmanchée sur une surface extérieure radiale de la bague tournante 34, axialement du côté de l'ensemble de détection 32. Le support 49 comprend une portion axiale emmanchée sur la surface extérieure radiale de la bague tournante 34 et une portion radiale dirigée vers l'extérieur à partir de la portion axiale.

L'élément codeur 48 se complète par une partie active 50 fixée, par exemple par surmoulage, sur la portion radiale du support 49. La partie active 50 peut se présenter sous la forme d'un anneau multipolaire, par exemple en plasto-ferrite. On choisira le nombre de pôles de la partie active 50 comme un multiple du nombre de pôles du moteur 1.

La partie active 50 est légèrement en saillie axiale par rapport à la bague tournante 34 et est radialement disposée dans l'espace délimité par les portions axiales de grand diamètre 40b et de petit diamètre 40c du bloc capteur 40. La partie active 50 est séparée des éléments capteurs 43 par un faible entrefer axial. Lors de la rotation de la bague tournante 34 par rapport à la bague non tournante 33, la partie active 50 du codeur est entraîné en rotation autour de l'axe 31a et défile à rotation devant le ou les éléments capteurs 43.

A titre de variante, on pourrait bien entendu prévoir un entrefer radial avec un ou des capteurs 43 disposés à l'intérieur ou à l'extérieur de la partie active 50.

Le flasque 30 de support se présente sous la forme d'une coupelle annulaire réalisée en matière métallique. Il comprend une portion axiale 30a cylindrique délimitant un logement à l'intérieur duquel sont montés le roulement 31 et le bloc capteur 40. Le bloc capteur 40 est monté à l'intérieur de la portion axiale 30a avec un ajustement permettant un bon centrage dudit bloc capteur tout en autorisant le déplacement angulaire de celui-ci par rapport à la portion axiale 30a du flasque 30 de support autour de l'axe 31a. La bague non tournante 33 du roulement 31 est emmanchée à l'intérieur de la portion axiale 30a du flasque 30 de support. De manière à obtenir le positionnement axial du roulement 31 à l'intérieur de la portion axiale 30a, celle-ci est prolongée à une extrémité axiale par une portion 30b sensiblement radiale s'étendant vers l'intérieur et ménageant une surface de butée pour la surface radiale frontale 33b de la bague non tournante 33. La portion 30b radiale comprend un alésage (non référencé) pour permettre le passage de l'arbre 5.

Axialement du côté opposé à la portion 30b radiale, la portion axiale 30a est prolongée par une portion radiale 30c s'étendant vers l'extérieur et pourvue d'ouvertures 30d, ici au nombre de trois, pour permettre le passage des bornes 20 de connexion du moteur 1. La portion radiale 30c est prolongée, à une extrémité de grand diamètre, par une portion axiale 30e entourant radialement la portion axiale 30a et elle-même prolongée par une portion axiale 30f de plus grand diamètre. La portion radiale 40a du bloc capteur 40 est axialement en retrait par rapport à la portion radiale 30c du flasque, i.e. à l'intérieur du logement délimité par la portion axiale 30a, seuls le connecteur 41 et l'élément de positionnement 44 étant en saillie axiale par rapport à ladite portion radiale 30c.

L'espace annulaire délimité entre les portions axiales 30a et 30e permet le logement d'une extrémité des pièces polaires 19 du stator 3. La portion axiale 30f vient quant à elle recouvrir en partie la partie axiale 9 du carter 2, l'extrémité libre de ladite partie axiale 9 venant en butée contre la zone de raccordement des portions axiales 30e et 30f.

La retenue axiale du bloc capteur 40 à l'intérieur de la portion axiale 30a du flasque 30 de support contre le roulement 31 peut être obtenue dans un premier temps par l'ajustement prévu entre le bloc capteur 40 et la portion axiale 30a. En effet, bien que comme mentionné précédemment, le bloc capteur 40 soit monté avec possibilité de rotation autour de l'axe 31a, l'ajustement peut être choisi suffisamment serré pour permettre une retenue axiale dudit bloc à l'intérieur de la portion axiale 30a. Dans une variante de réalisation, on pourrait bien entendu prévoir des languettes élastiques radialement ménagées sur le bloc capteur 40 et aptes à coopérer avec le flasque 30 de support de manière à obtenir une liaison provisoire de manutention permettant une retenue axiale du bloc capteur 40. Dans cet état, l'ensemble constitué par le flasque 30 de support, le roulement 31 et l'ensemble de détection 32 peut être manipulé, transporté, et monté en limitant le risque de désolidarisation axiale des éléments le constituant.

Pour procéder au réglage du roulement 31 instrumenté, on procède de la manière suivante. Après avoir rapporté le flasque 30 sur le carter 2 jusqu'à ce que l'extrémité libre de la partie axiale 9 du carter 2 vienne en appui contre la zone de raccordement reliant les portions axiales 30e et 30f, on procède au réglage du positionnement angulaire relatif du bloc capteur 40 et du flasque de support 30.

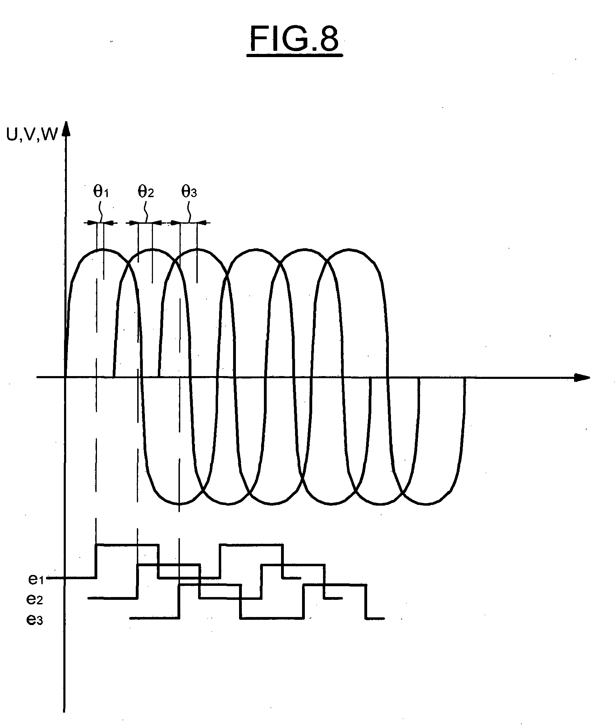

A cet égard, on entraîne en rotation, à vitesse constante, le moteur 1 par l'intermédiaire d'un organe d'entraînement extérieur (non représenté), par exemple à un moteur externe. Ensuite, on recueille les signaux sinusoïdaux U, V, W émis par les phases du stator 3 du moteur, comme illustré sur la figure 8 représentant l'évolution desdits signaux en fonction du temps. Les signaux émis se présentent ici sous la forme de signaux sinusoïdaux dont la fréquence est représentative de la vitesse de rotation du rotor du moteur.

Simultanément, on recueille les signaux e1, e2 et e3 émis par les éléments capteurs 43 de l'ensemble de détection 32 qui se présentent sous la forme de signaux de forme carrée. On compare ensuite les signaux émis par le stator 3 du moteur à ceux émis par les éléments capteurs 43 du palier 31 à roulement instrumenté pour calculer l'angle de décalage entre les signaux émis.

A cet effet, il est possible de considérer un front de montée d'un des signaux émis par les éléments capteurs 43 et de le comparer à l'amplitude maximale du signal émis par la phase correspondante du stator du moteur afin de déterminer un angle θₙ avec n = 1, 2 ou 3. On effectue cette opération pour chacune des phases du stator 3 du moteur. On déduit ensuite l'angle de décalage existant entre la position angulaire des éléments capteurs 43 par rapport aux pôles du stator 3, par exemple par minimisation de la somme des carrés des écarts θₙ.

On déplace angulairement le bloc capteur 40 à l'intérieur de la partie axiale 30a du flasque de support 12 autour de l'axe 31a d'une valeur égale à l'angle de décalage déterminé, de manière à optimiser le positionnement relatif des éléments capteurs 43 par rapport aux phases du stator 3 du moteur. Ainsi, on modifie la position angulaire des éléments capteurs 43 par rapport à la bague non tournante 33 jusqu'à la position de réglage souhaitée. Dans cette position, le front de montée de chacun des signaux émis par les éléments capteurs 43 correspond sensiblement au maximum de l'amplitude du signal correspondant émis par la phase associée du stator 3. On considère ce front de montée comme un signal de référence. En moyennant l'erreur des éléments capteurs 43 par rapport aux phases du stator 3 du moteur, on optimise le réglage du palier 1 à roulement.

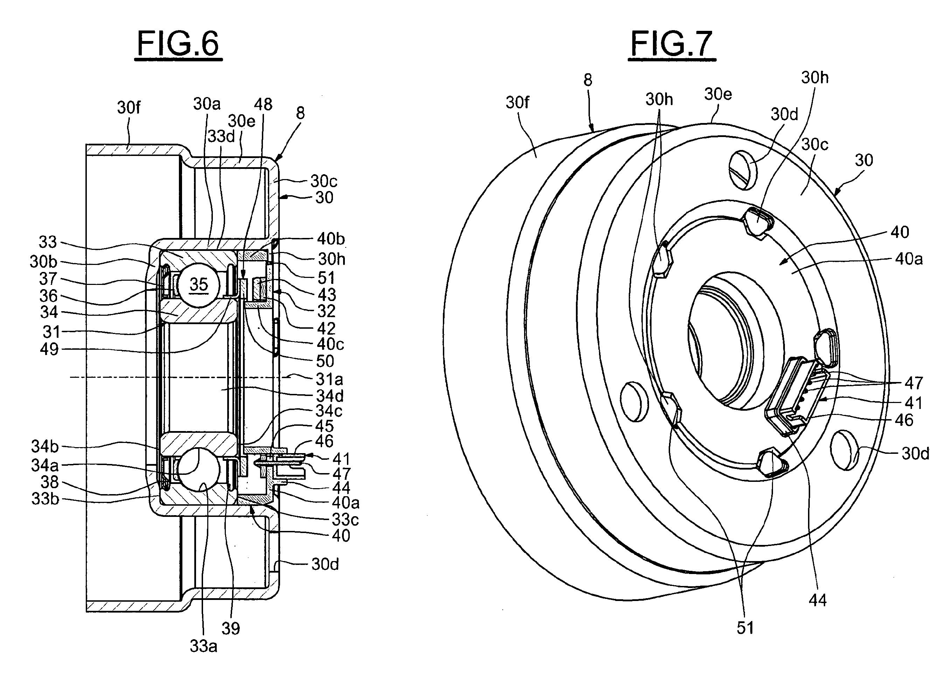

Une fois que cette position idéale est atteinte, on déforme mécaniquement localement la portion courbe 30g reliant la portion axiale 30a et la portion radiale 30c de manière à repousser la tôle pour former des protubérances 30h radiales de fixation (figures 6 et 7) dirigées vers l'intérieur en saillie dans des encoches 51 ménagées sur la portion radiale 40a du bloc capteur. Les encoches 51 et les protubérances 30h sont ici au nombre de cinq, en étant réparties de manière uniforme sur la circonférence du bloc capteur 40 et de la portion radiale 30c du flasque 30 de support, respectivement.

Dans le mode de réalisation illustré sur les figures 6 et 7, les protubérances 30h formant moyens de solidarisation angulaire du bloc capteur 40 et du flasque de support 30 sont obtenues par sertissage de façon particulièrement économique, par exemple avec un outil de sertissage muni de dents appropriées venant, par déformation plastique, repousser localement la matière du flasque 30 dans les encoches 51. En effet, le flasque de support 30 est réalisé en tôle d'épaisseur mince, ce qui favorise une déformation plastique locale aisée.

Bien que dans le mode de réalisation illustré, les moyens de solidarisation angulaires du bloc capteur 40 et du flasque 30 de support soient obtenus par des déformations locales dudit flasque de manière à former les protubérances 30h, on conçoit aisément qu'il est également possible, sans sortir du cadre de l'invention, de prévoir d'autres types de déformations. Par exemple, il est possible de prévoir une déformation radiale de la portion radiale 30a du flasque 30 de support par poinçonnage de manière à former des saillies radiales coopérant avec des évidements du bloc capteur 40 pour la solidarisation angulaire du flasque 30 et dudit bloc. Dans une autre variante, il peut encore être possible de prévoir un collage du bloc capteur 40 dans la portion axiale 30a du flasque 30.

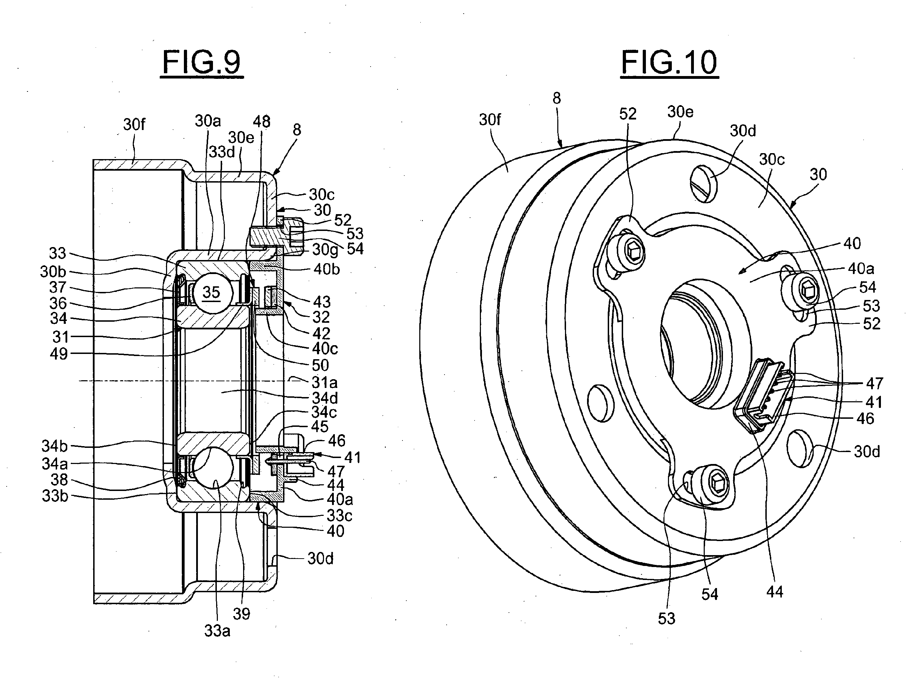

Dans la variante de réalisation illustrée sur les figures 9 et 10 sur lesquelles les éléments identiques portent les mêmes références, la solidarisation angulaire du bloc capteur 40 et du flasque 30 de support est obtenue par vissage. Dans cette variante, la dimension axiale de la portion axiale 40b du bloc capteur est légèrement accrue de manière que des oreilles 52 radiales prolongeant localement vers l'extérieur la paroi radiale 40a vienne en appui axial contre la portion radiale 30c du flasque 30 de support. Le bloc capteur 40 comprend ici trois oreilles 52 pourvues chacune d'un trou oblong 53 traversant. Le flasque 30 de support comprend des organes de fixation 54, tels que des vis, passant à travers les trous 53 et venant se fixer dans la portion radiale 30c pour solidariser le bloc capteur 40 et le flasque 30 de support. Dans ce mode de réalisation, les oreilles 52 et les organes de fixation 54 forment les moyens d'indexation angulaires du bloc capteur 40 et du flasque 30 de support. Le dispositif est conçu pour que, lorsque les organes de fixation 54 sont centrés au milieu des trous oblongs 53, le bloc capteur 40 soit pré-positionné dans une position angulaire approximative, les trous oblongs 53 permettant un débattement angulaire du bloc capteur 40 de part et d'autre de cette position de pré-réglage, par exemple +/-10°, la position angulaire définitive obtenue par réglage fin comme décrit précédemment étant verrouillé par serrage des organes de fixation 54.

Grâce à l'invention, on dispose ainsi d'un système de support 8 formant un sous-ensemble pré-monté prévu pour être disposé à l'extrémité axiale ouverte du carter 2 et assurant les fonctions de support de l'arbre 5 tournant du moteur électrique, d'obturation de la face radiale ouverte du carter 2, d'anti-rotation du stator 3, et de détection de paramètres de rotation de l'arbre 5.

En outre, on simplifie considérablement les étapes de montage du moteur sans balai en évitant chez les constructeurs le montage et l'indexation de composants de détection à la fois sur le stator et sur le rotor et en offrant la possibilité d'optimiser l'indexation du roulement 31 instrumenté.

En effet, dans un premier temps et avant montage sur le moteur 1, la position relative angulaire du bloc capteur 40 et du flasque de support 30 est préétablie. Une fois le palier 31 à roulement monté sur le moteur 1, on peut procéder ensuite à un réglage particulièrement précis de la position angulaire relative de ces deux éléments par comparaison de signaux électriques, puis on fixe cette position.

On peut ainsi fournir à un fabricant de moteur électrique un sous-ensemble multifonctions assurant la liaison mécanique entre l'arbre et le carter, et supportant le ou les éléments capteurs de rotation tout en permettant encore un ajustement de la position angulaire relative des éléments capteurs par rapport à la bague non tournant du roulement. Le système de support est compact axialement, et capable par ailleurs d'assurer l'étanchéité du moteur par montage d'un seul sous-ensemble.

## Revendications

1. Système de support d'arbre pour moteur électrique (1) du type comprenant un carter (2), un rotor et un stator (3) pourvu d'une pluralité de pièces polaires (19) comportant un bobinage et des bornes (20) de connexion reliées au bobinage des pièces polaires, le système comprenant :
- un palier à roulement (31) muni d'une bague tournante (34) prévue pour être montée sur ledit arbre et d'une bague non tournante (33),
- un ensemble de détection (32) de paramètres de rotation, et
- un flasque (30) de support pourvu d'une première portion axiale (30a) cylindrique délimitant un logement à l'intérieur duquel est montée la bague non tournante, d'une première portion radiale (30b) prolongeant vers l'intérieur une extrémité axiale de la première portion axiale (30a) et ménageant une surface de butée pour la bague non tournante, et d'une seconde portion radiale (30c) prolongeant vers l'extérieur la première portion axiale (30a) axialement du côté opposé à la première portion radiale (30b),
**caractérisé en ce que** le flasque (30) comprend une seconde portion axiale (30e) prolongeant une extrémité de grand diamètre de la seconde portion radiale (30c) et entourant radialement la première portion axiale et délimitant avec ladite portion un espace annulaire permettant le logement d'une extrémité des pièces polaires du stator du moteur électrique, ladite seconde portion radiale (30c) étant pourvue d'ouvertures (30d) pour permettre le passage des bornes (20) de connexion du stator du moteur,
et **en ce que** l'ensemble de détection (32) est muni d'un bloc capteur (40) comprenant au moins un élément capteur (43) et d'un élément codeur (48) monté sur la bague tournante (34) apte à défiler à rotation en regard de l'élément capteur autour d'un axe (31a) du système, le bloc capteur (40) étant monté à l'intérieur du logement délimité par la première portion axiale (30a) du flasque en étant monté en contact contre ladite portion axiale (30a) et mobile angulairement par rapport à ladite portion axiale (30a) autour de l'axe (31a) en vue d'une immobilisation de la position angulaire relative du bloc capteur et du flasque dans une position de réglage choisie.

2. Système selon la revendication 1, dans lequel le bloc capteur (40) définit un espace annulaire ouvert en direction du palier à roulement à l'intérieur duquel est disposé l'élément capteur (43).

3. Système selon la revendication 2, dans lequel le bloc capteur (40) comprend une portion axiale (40b) de grand diamètre maintenue en appui axial contre la bague non tournante du palier à roulement par l'intermédiaire du flasque (30), une portion axiale (40c) de petit diamètre et une portion radiale (40a) reliant lesdites portions axiales.

4. Système selon la revendication 3, dans lequel la portion axiale (40c) de petit diamètre du bloc capteur forme un passage étroit avec la bague tournante du palier à roulement.

5. Système selon l'une quelconque des revendications précédentes, comprenant des moyens de liaison temporaires entre le bloc capteur (40) et le flasque (30) aptes à permettre une retenue axiale dudit bloc relativement au flasque.

6. Système selon l'une quelconque des revendications précédentes, comprenant des moyens d'indexation angulaire (30h ; 52, 54) aptes à immobiliser la position angulaire relative du bloc capteur et la portion axiale (30a) du flasque, lorsque le bloc capteur est positionné angulairement par rapport à la bague non tournante dans une position de réglage choisie.

7. Système selon la revendication 6, dans lequel le flasque de support (30) comprend au moins en partie les moyens d'indexation angulaire (30h ; 54).

8. Système selon la revendication 6 ou 7, dans lequel le flasque (30) comprend localement des protubérances (30h) en saillie radialement vers l'intérieur formant les moyens d'indexation angulaire.

9. Système selon la revendication 8, dans lequel le bloc capteur (40) comprend des encoches (51) aptes à coopérer avec les protubérances (30h) du flasque (30).

10. Système selon l'une quelconque des revendications 5 à 7, dans lequel le bloc capteur (40) comprend des oreilles (52) de fixation formant en partie les moyens d'indexation angulaire.

11. Moteur électrique (1) de type synchrone comprenant un arbre (5) et un système (8) selon l'une quelconque des revendications précédentes supportant ledit arbre.

12. Procédé de montage d'un système de support d'arbre pour moteur électrique du type comprenant un carter (2), un rotor et un stator (3) pourvu d'une pluralité de pièces polaires (19) comportant un bobinage et des bornes (20) de connexion reliées au bobinage des pièces polaires, le système comprenant un palier à roulement (31) muni d'une bague tournante (34) prévue pour être montée sur ledit arbre et d'une bague non tournante (33), un ensemble de détection (32) de paramètres de rotation muni d'un bloc capteur (40) comprenant au moins un élément capteur (43) et d'un élément codeur (48) monté sur la bague tournante (34) apte à défiler à rotation en regard de l'élément capteur autour d'un axe (31a) du système, et un flasque (30) de support pourvu d'une première portion axiale (30a) cylindrique délimitant un logement à l'intérieur duquel est montée la bague non tournante, d'une première portion radiale (30b) prolongeant vers l'intérieur une extrémité axiale de la première portion axiale (30a) et ménageant une surface de butée pour la bague non tournante, d'une seconde portion radiale (30c) prolongeant vers l'extérieur la première portion axiale (30a) axialement du côté opposé à la première portion radiale (30b), et d'une seconde portion axiale (30e) prolongeant une extrémité de grand diamètre de la seconde portion radiale (30c) et entourant radialement la première portion axiale et délimitant avec ladite portion un espace annulaire permettant le logement d'une extrémité des pièces polaires du stator du moteur électrique, ladite seconde portion radiale (30c) étant pourvue d'ouvertures (30d) pour permettre le passage des bornes (20) de connexion du stator du moteur, **caractérisé en ce qu'**avant montage sur l'arbre, on pré-positionne angulairement le bloc capteur à l'intérieur du logement délimité par la première portion axiale du flasque, et en contact contre ladite portion axiale et après montage sur l'arbre, on fait tourner le bloc capteur à l'intérieur de la première portion axiale du flasque jusqu'à ce qu'à obtenir un positionnement relatif angulaire choisi de l'élément capteur et de la bague non tournante, puis on solidarise angulairement le bloc capteur et le flasque.

13. Procédé selon la revendication 12, dans lequel on solidarise angulairement le bloc capteur (40) et le flasque (30) par déformation mécanique du flasque pour former des protubérances (30h) de fixation du bloc capteur.

14. Procédé selon la revendication 13, dans lequel, avant la solidarisation angulaire du bloc capteur (40) et du flasque (30), on entraîne en rotation le moteur électrique par un organe d'entraînement extérieur, on recueille les signaux émis par le stator (3) du moteur et par le ou les éléments capteurs (43), on compare les signaux émis, on calcule l'angle de décalage entre les signaux émis par le stator du moteur et les signaux émis par le ou les éléments capteurs, et on fait tourner le bloc capteur à l'intérieur du flasque d'une valeur égale à l'angle de décalage déterminé.

## Patentansprüche

1. Wellenstützsystem für einen Elektromotor (1) des Typs, der ein Gehäuse (2), einen Rotor und einen Stator (3), der mit mehreren Polstücken (19), die eine Wicklung und Anschlussklemmen (20) aufweisen, die mit der Wicklung der Polstücke verbunden sind, versehen ist, umfasst, wobei das System Folgendes umfasst:
- ein Kugellager (31), das mit einem Drehring (34) versehen ist, der vorgesehen ist, um auf die Welle montiert zu werden, und mit einem nicht drehenden Ring (33),
- eine Erfassungseinheit (32) von Rotationsparametern, und
- einen Stützflansch (30), der mit einem ersten axialen zylindrischen Abschnitt (30a) versehen ist, der eine Aufnahme abgrenzt, in deren Innerem der nicht drehende Ring montiert ist, mit einem ersten radialen Abschnitt (30b), der ein axiales Ende des ersten axialen Abschnitts (30a) in das Innere verlängert und eine Anschlagoberfläche für den nicht drehenden Ring einrichtet, und mit einem zweiten radialen Abschnitt (30c), der den ersten axialen Abschnitt (30a) axial auf der entgegengesetzten Seite zu dem ersten radialen Abschnitt (30b) nach außen verlängert,
**dadurch gekennzeichnet, dass** der Flansch (30) einen zweiten axialen Abschnitt (30e) umfasst, der ein Ende mit großem Durchmesser des zweiten radialen Abschnitts (30c) verlängert und radial den ersten axialen Abschnitt umgibt und mit dem Abschnitt einen Ringraum abgrenzt, der das Aufnehmen eines Endes der Polstücke des Stators des Elektromotors erlaubt, wobei der zweite radiale Abschnitt (30c) mit Öffnungen (30d) versehen ist, um das Durchgehen der Anschlussklemmen (20) des Stators des Motors zu erlauben,
und dass die Erfassungseinheit (32) mit einem Sensorblock (40) versehen ist, der mindestens ein Sensorelement (43) umfasst, und mit einem Codierelement (48), das auf den Drehring (34) montiert ist, das geeignet ist, in Rotation gegenüber dem Sensorelement um eine Achse (31a) des Systems zu laufen, wobei der Sensorblock (40) in dem Inneren der Aufnahme montiert ist, die durch den ersten axialen Abschnitt (30a) des Flanschs abgegrenzt ist, indem er in Berührung gegen den axialen Abschnitt (30a) montiert ist und winkelig in Bezug auf den axialen Abschnitt (30a) um die Achse (31a) beweglich ist, um die relative Winkelposition des Sensorblocks und des Flanschs in einer ausgewählten Einstellposition stillzustellen.

2. System nach Anspruch 1, bei dem der Sensorblock (40) einen Ringraum definiert, der in Richtung des Kugellagers, in dessen Innerem das Sensorelement (43) angeordnet ist, offen ist.

3. System nach Anspruch 2, bei dem der Sensorblock (40) einen axialen Abschnitt (40b) mit großem Durchmesser umfasst, der in axialer Auflage gegen den nicht drehenden Ring des Kugellagers über den Flansch (30) gehalten wird, wobei ein axialer Abschnitt (40c) mit kleinem Durchmesser und ein radialer Abschnitt (40a) die axialen Abschnitte verbindet.

4. System nach Anspruch 3, bei dem der axiale Abschnitt (40c) mit kleinem Durchmesser des Sensorblocks eine enge Passage mit dem Drehring des Kugellagers bildet.

5. System nach einem der vorhergehenden Ansprüche, das Mittel zum zeitweiligen Verbinden zwischen dem Sensorblock (40) und dem Flansch (30) umfasst, die geeignet sind, um ein axiales Zurückhalten des Blocks in Bezug auf den Flansch zu erlauben.

6. System nach einem der vorhergehenden Ansprüche, das Winkelpositionierungsmittel (30h; 52, 54) umfasst, die geeignet sind, um die relative Winkelposition des Sensorblocks und des axialen Abschnitts (30a) des Flanschs stillzustellen, wenn der Sensorblock winkelig in Bezug auf den nicht drehenden Ring in einer ausgewählten Einstellposition positioniert ist.

7. System nach Anspruch 6, bei dem der Stützflansch (30) mindestens zum Teil die Winkelpositionierungsmittel (30h; 54) umfasst.

8. System nach Anspruch 6 oder 7, bei dem der Flansch (30) stellenweise Vorsprünge (30h) umfasst, die radial nach innen vorstehen, die die Winkelpositionierungsmittel bilden.

9. System nach Anspruch 8, bei dem der Sensorblock (40) Kerben (51) umfasst, die geeignet sind, um mit den Vorsprüngen (30h) des Flanschs (30) zusammenzuwirken.

10. System nach einem der Ansprüche 5 bis 7, bei dem der Sensorblock (40) Befestigungsohren (52) umfasst, die zum Teil die Winkelpositionierungsmittel bilden.

11. Elektromotor (1) des synchronen Typs, der eine Welle (5) und ein System (8) nach einem der vorhergehenden Ansprüche, das die Welle stützt, umfasst.

12. Montageverfahren eines Wellenstützsystems für einen Elektromotor des Typs, der ein Gehäuse (2), einen Rotor und einen Stator (3), der mit mehreren Polstücken (19), die eine Wicklung und Anschlussklemmen (20) aufweisen, die mit der Wicklung der Polstücke verbunden sind, versehen ist, umfasst, wobei das System ein Kugellager (31) umfasst, das mit einem Drehring (34) versehen ist, der vorgesehen ist, um auf die Welle montiert zu werden, und mit einem nicht drehenden Ring (33), wobei eine Erfassungseinheit (32) von Rotationsparametern, die mit einem Sensorblock (40) versehen ist, der mindestens ein Sensorelement (43) umfasst, und mit einem Codierelement (48), das auf den Drehring (34) montiert ist, das geeignet ist, gegenüber dem Sensorelement um eine Achse (31a) des Systems in Rotation, zu laufen und einem Stützflansch (30), der mit einem ersten zylindrischen axialen Abschnitt (30a) versehen ist, der eine Aufnahme abgrenzt, in deren Innerem der nicht drehende Ring montiert ist, mit einem ersten radialen Abschnitt (30b), der ein axiales Ende des ersten axialen Abschnitts (30a) nach innen verlängert und eine Anschlagoberfläche für den nicht drehenden Ring einrichtet, mit einem zweiten radialen Abschnitt (30c), der den ersten axialen Abschnitt (30a) auf der dem ersten radialen Abschnitt (30b) gegenüberliegenden Seite axial nach außen verlängert, und mit einem zweiten axialen Abschnitt (30e), der ein Ende mit großem Durchmesser des zweiten radialen Abschnitts (30c) verlängert und den ersten axialen Abschnitt radial umgibt und mit dem Abschnitt einen Ringraum abgrenzt, der das Aufnehmen eines Endes der Polstücke des Stators des Elektromotors erlaubt, wobei der zweite radiale Abschnitt (30c) mit Öffnungen (30d) versehen ist, um das Durchgehen der Anschlussklemmen (20) des Stators des Motors zu erlauben, **dadurch gekennzeichnet, dass** der Sensorblock vor der Montage auf die Welle im Inneren der Aufnahme, die von dem ersten axialen Abschnitt des Flanschs abgegrenzt wird und gegen den axialen Abschnitt in Berührung ist, vorpositioniert wird, und nach der Montage auf die Welle der Sensorblock im Inneren des ersten axialen Abschnitts des Flanschs gedreht wird, bis eine ausgewählte relative Winkelpositionierung des Sensorelements und des nicht drehenden Rings erzielt ist, wonach der Sensorblock und der Flansch winkelig fest verbunden werden.

13. Verfahren nach Anspruch 12, bei dem der Sensorblock (40) und der Flansch (30) durch mechanische Verformung des Flanschs winkelig fest verbunden werden, um Vorsprünge (30h) zum Befestigen des Sensorblocks zu bilden.

14. Verfahren nach Anspruch 13, bei dem der Elektromotor vor dem festen winkeligen Verbinden des Sensorblocks (40) und des Flanschs (30) in Drehung durch ein externes Antriebsorgan angetrieben wird, die Signale, die von dem Stator (3) des Motors und von dem oder den Sensorelementen (43) gesendet werden, gesammelt werden, die gesendeten Signale verglichen werden, der Versatzwinkel zwischen den von dem Stator des Motors gesendeten Signalen und den von dem oder den Sensorelementen gesendeten Signalen verglichen wird, und der Sensorblock im Inneren des Flanschs um einen Wert, der gleich dem bestimmten Versatzwinkel ist, gedreht wird.

## Claims

1. Shaft support system for an electric motor (1) of the type comprising a case (2), a rotor and a stator (3) provided with a plurality of pole pieces (19) comprising a winding and connection terminals (20) linked to the winding of the pole pieces, the system comprising:
- a rolling bearing (31) provided with a rotating ring (34) designed to be mounted on said shaft and a non-rotating ring (33),
- an assembly (32) for detecting rotation parameters, and
- a support flange (30) provided with a first cylindrical axial portion (30a) delimiting a housing inside which the non-rotating ring is mounted, a first radial portion (30b) extending towards the interior an axial end of the first axial portion (30a) and forming an abutment surface for the non-rotating ring, and a second radial portion (30c) extending towards the outside the first axial portion (30a) axially on the side opposite to the first radial portion (30b),
**characterized in that** the flange (30) comprises a second axial portion (30e) extending a large diameter end of the second radial portion (30c) and radially surrounding the first axial portion and delimiting, with said portion, an annular space making it possible to house an end of the pole pieces of the stator of the electric motor, said second radial portion (30c) being provided with holes (30d) to allow the passage of the connection terminals (20) of the stator of the motor,
and **in that** the detection assembly (32) is provided with a sensor block (40) comprising at least one sensor element (43) and a coder element (48) mounted on the rotating ring (34) suitable for running rotationally facing the sensor element about an axis (31a) of the system, the sensor block (40) being mounted inside the housing delimited by the first axial portion (30a) of the flange by being mounted in contact against said axial portion (30a) and angularly mobile relative to said axial portion (30a) about the axis (31a) in view of an immobilization of the relative angular position of the sensor block and of the flange in a chosen setting position.

2. System according to Claim 1, in which the sensor block (40) defines an annular space that is open towards the rolling bearing inside which the sensor element (43) is arranged.

3. System according to Claim 2, in which the sensor block (40) comprises a large diameter axial portion (40b) kept bearing axially against the non-rotating ring of the rolling bearing via the flange (30), a small diameter axial portion (40c) and a radial portion (40a) linking said axial portions.

4. System according to Claim 3, in which the small diameter axial portion (40c) of the sensor block forms a narrow passage with the rotating ring of the rolling bearing.

5. System according to any one of the preceding claims, comprising temporary link means between the sensor block (40) and the flange (30) suitable for allowing an axial retention of said block relative to the flange.

6. System according to any one of the preceding claims, comprising angular indexing means (30h; 52, 54) suitable for immobilizing the relative angular position of the sensor block and the axial portion (30a) of the flange, when the sensor block is positioned angularly relative to the non-rotating ring in a chosen setting position.

7. System according to Claim 6, in which the support flange (30) at least partly comprises the angular indexing means (30h; 54).

8. System according to Claim 6 or 7, in which the flange (30) locally comprises protuberances (30h) protruding radially towards the interior forming the angular indexing means.

9. System according to Claim 8, in which the sensor block (40) comprises notches (51) suitable for cooperating with the protuberances (30h) of the flange (30).

10. System according to any one of Claims 5 to 7, in which the sensor block (40) comprises fixing lugs (52) partly forming the angular indexing means.

11. Electric motor (1) of synchronous type comprising a shaft (5) and a system (8) according to any one of the preceding claims supporting said shaft.

12. Method for mounting a shaft support system for electric motor of the type comprising a case (2), a rotor and a stator (3) provided with a plurality of pole pieces (19) comprising a winding and connection terminals (20) linked to the winding of the pole pieces, the system comprising a rolling bearing (31) provided with a rotating ring (34) designed to be mounted on said shaft and a non-rotating ring (33), an assembly (32) for detecting rotation parameters provided with a sensor block (40) comprising at least one sensor element (43) and a coder element (48) mounted on the rotating ring (34) suitable for running rotationally facing the sensor element about an axis (31a) of the system, and a support flange (30) provided with a first cylindrical axial portion (30a) delimiting a housing inside which the non-rotating ring is mounted, a first radial portion (30b) extending towards the interior an axial end of the first axial portion (30a) and forming an abutment surface for the non-rotating ring, a second radial portion (30c) extending towards the outside the first axial portion (30a) axially on the side opposite to the first radial portion (30b), and a second axial portion (30e) extending a large diameter end of the second radial portion (30c) and radially surrounding the first axial portion and delimiting, with said portion, an annular space making it possible to house an end of the pole pieces of the stator of the electric motor, said second radial portion (30c) being provided with holes (30d) to allow the passage of the connection terminals (20) of the stator of the motor, **characterized in that**, before mounting on the shaft, the sensor block is pre-positioned angularly inside the housing delimited by the first axial portion of the flange and in contact against said axial portion and, after mounting on the shaft, the sensor block is rotated inside the first axial portion of the flange until a chosen relative angular positioning of the sensor element and of the non-rotating ring is obtained, then the sensor block and the flange are secured angularly.

13. Method according to Claim 12, in which the sensor block (40) and the flange (30) are secured angularly by mechanical deformation of the flange to form protuberances (30h) for fixing the sensor block.

14. Method according to Claim 13, in which, before the angular securing of the sensor block (40) and of the flange (30), the electric motor is driven rotationally by an external driving member, the signals emitted by the stator (3) of the motor and by the sensor element or elements (43) are collected, the emitted signals are compared, the offset angle between the signals emitted by the stator of the motor and the signals emitted by the sensor element or elements is computed, and the sensor block is rotated inside the flange by a value equal to the determined offset angle.
